# EUROPEAN PATENT SPECIFICATION

(11) **EP 2 731 008 B1**
(45) Date of publication and mention of the grant of the patent: **18.03.2020**
(21) Application number: 12192302.3
(22) Date of filing: 12.11.2012
(51) Int. Cl.: G06F 8/41, G06F 9/52, G06F 9/30

(54) **Resource contention in multiple cores**
Ressourcenkonflikte in mehreren Kernen
Contention de ressource dans plusieurs noyaux

(43) Date of publication of application: 14.05.2014
(73) Proprietor: FUJITSU LIMITED, Kawasaki-shi, Kanagawa 211-8588 (JP)
(72) Inventor: Li, Michael, Hayes, Middlesex UB4 8FE (GB)
(74) Representative: Haseltine Lake Kempner LLP

(56) References cited:
- US-A- 5 093 916
- US-A1- 2010 275 190
- US-A1- 2011 067 014

## Description

### Field of the Invention

The present invention relates to resource contention in high performance computing, where multiple processing cores have access to shared resources.

### Background of the Invention

General purpose and specialized computer processors typically include a plurality of cores or processing elements. For present purposes a "core" may be thought of as hardware resources necessary for executing program code instructions. The term "processing element" is intended to be somewhat broader in encompassing any distinct processing unit of a chip or system which is able to independently perform some computations (such as floating-point or integer arithmetic). The number of cores and processing elements on general purpose and specialized computer processors is increasing. These different cores and processing elements must share certain hardware resources such as cache (fast memory), main memory (RAM), bandwidth to main memory, memory buses, network interface controllers (NIC), bandwidth through the NICs, non-volatile disk, bandwidth to disk and all the associated queues and buffers needed to provide these resources.

As the cores and processing elements (henceforth merely referred to as "cores" for convenience) access and compete for shared resources, the contention for resources causes a degradation in performance so that performance may become very poor. One reason for possibly very poor performance is bad scheduling of instructions using shared resources. Resource contention is likewise an issue in emerging multicore processors with extended functionality such as on-chip graphical processing units (GPU) and other co-processors, either on-chip or tightly coupled so that the processor directs the operation of the co-processor. Such extended functionality is an example of "extra capabilities" referred to below. The addition of resources providing extra capabilities is usually done in such a way that a number of cores must share either the resource directly, or share some other resource which allows the capability to be used.

"The extra capabilities" may be provided by a GPU or other co-processor, and/or by one or more offload engines (see below). In the first case, a core can either carry out arithmetic itself, or direct a GPU or other co-processor to do this much more quickly. In the second case, a core can either prepare messages for communication (perhaps carrying out a little arithmetic) or instead an offload engine could prepare messages for communication (perhaps carrying out a little arithmetic). The extra capabilities are not confined to arithmetic and communication functions, and could in principle refer to other things (e.g. a source of unpredictable random numbers for cryptography or hardware optimized to carry out some calculation such as signal processing or encryption/decryption).

There are many different hardware configurations and programming models applicable to high performance computing. A popular approach to high-performance computing currently is the cluster system, in which a plurality of nodes each having a multicore processor (also called "chip" below) are interconnected by a high-speed network. The cluster system is programmed by a human programmer who writes source code, making use of existing code libraries to carry out generic functions. The source code is then compiled to lower-level code, for example code at the ISA (Instruction Set Architecture) level capable of being executed by processor types having a specific instruction set, or to assembly language dedicated to a specific processor. There is often a final stage of assembling or (in the case of a virtual machine, interpreting) the assembly code into machine code. Applications are run under supervision of an operating system (OS).

To assist understanding of the invention to be described, some relevant techniques in the field will be outlined.

Applications for computer systems having multiple cores may be written in a conventional computer language (such as C or Fortran), augmented by libraries for allowing the programmer to take advantage of the parallel processing abilities of the multiple cores. In this regard, it is usual to refer to "processes" being run on the cores.

One such library is the Message Passing Interface, MPI, which uses a distributed-memory model (each process being assumed to have its own area of memory), and facilitates communication among the processes. MPI allows groups of processes to be defined and distinguished, and includes routines for so-called "barrier synchronization", which is an important feature for allowing multiple processes or processing elements to work together. Barrier synchronization is a technique of holding up all the processes in a synchronization group executing a program until every process has reached the same point in the program. This is achieved by an MPI function call which has to be called by all members of the group before the execution can proceed further.

As already mentioned, MPI uses a distributed memory model in which each task has its own local memory. Another approach to parallel programming is shared-memory, where multiple processes or cores can access the same memory or area of memory in order to execute instructions in multiple, concurrent execution paths or "threads". OpenMP is such a shared-memory processing model.

A synchronization group may be constituted by all the cores of a multicore processor. Then, barrier synchronization is also possible in hardware form, such as by an on-chip logic circuit receiving outputs from the plurality of cores. This gives the advantage of higher speed in comparison with a software-based barrier.

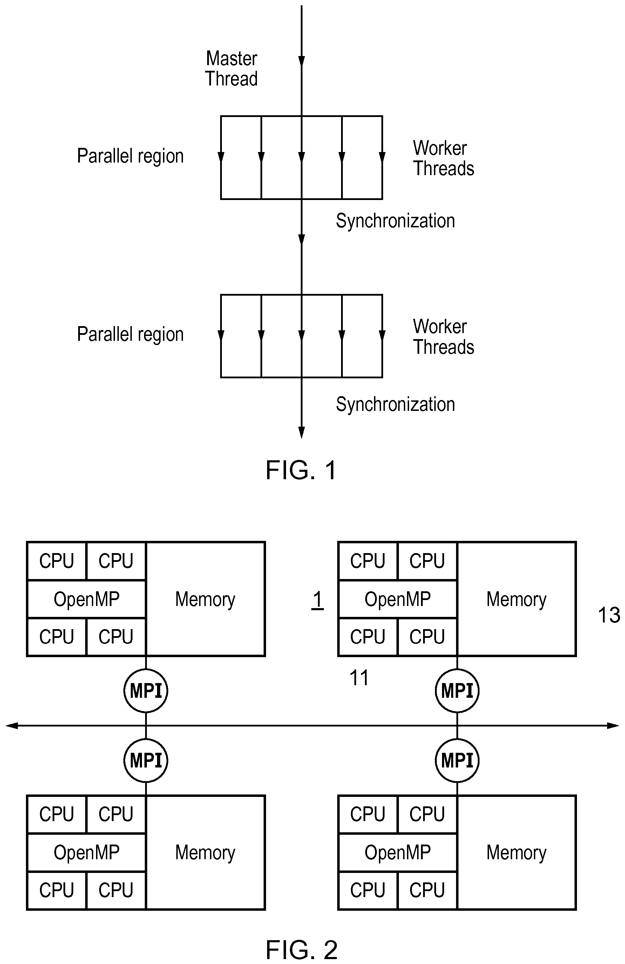

OpenMP provides a so-called "fork-and-join" model illustrated in Figure 1, in which a program begins execution as a single process or thread (Master Thread). This thread executes instructions sequentially until a parallelization directive is encountered, at which point the Master Thread divides into a group of parallel Worker Threads in a Parallel region of the program. Typically, each thread is carried out by a respective core, although this is not essential. The worker threads execute instructions in parallel until they reach the end of the Parallel region. After synchronization (see above) the worker threads combine again back to a single Master Thread, which continues sequential instruction execution until the next parallelization directive is reached.

The MPI and OpenMP models can be combined in a hybrid programming model, denoted below by "MPI+OpenMP", and applicable to the above mentioned cluster system. When a programmer writes source code in the hybrid programming model, he/she uses MPI for communication between the nodes ("coarse-grain parallelization") and OpenMP for communication among the cores of each node ("fine-grain parallelization"). In the fork-and-join model of Figure 1 for example, it would be possible to insert MPI calls in the Master Thread, as indicated in the Figure. In general, it can be considered that OpenMP is liable to cause contention for local memory/cache resources whilst MPI is liable to cause resource contention for NICs, disk storage etc.

Incidentally, as an alternative to executing instructions with synchronization, it is possible to specify one or more instructions as "atomic"; that is, to be executed without interruption until it is completed.

The above mentioned "offloading" is an important technique for maximising the processing throughput in a multicore processor. This involves transferring (offloading) certain routine tasks from the core itself to a special-purpose processor or circuit which may be able to perform the task more efficiently. Such a processor or circuit is called an "offload engine". Examples of tasks carried out by offload engines include input/output (I/O) including direct memory access (DMA), message passing and synchronization. A NIC processor may be used as an offload engine, since although slower than the cores it is closer to the network and therefore able to accelerate some I/O tasks.

A "solver" is a program (or a software library) which solves a certain kind of mathematical problem. By providing a solution to a problem described in a generic form, the solver can be applied to many different specific problems of the same type..

Typically, the kinds of mathematical problems to which high performance computing is directed are simulations, including weather prediction which is essentially a fluid dynamics problem. Simulations typically require the solution of large numbers of linear algebra equations, the coefficients of which (typically represented as matrices) may be either "sparse" or "dense", requiring a sparse or dense iterative solver respectively. As an example, "Lis" is a library for solving systems of linear equations with real sparse matrices using iterative solvers.

Figure 2 schematically illustrates the use of MPI and OpenMP in a cluster system of nodes 1 interconnected by a system bus 2. This bus may take various forms including crossbars, a mesh network and so on. Each node 1 consists of a plurality of cores 11 (four each in this example) and a common memory 13 for each node. Each core 11 has processing resources for executing threads (usually one per core) and may have a small local cache (not shown) in addition to access to the common memory 13. As indicated in Figure 2, OpenMP is employed for communication among the cores (CPUs) of each node 1, whereas MPI is employed in communications among the nodes 1.

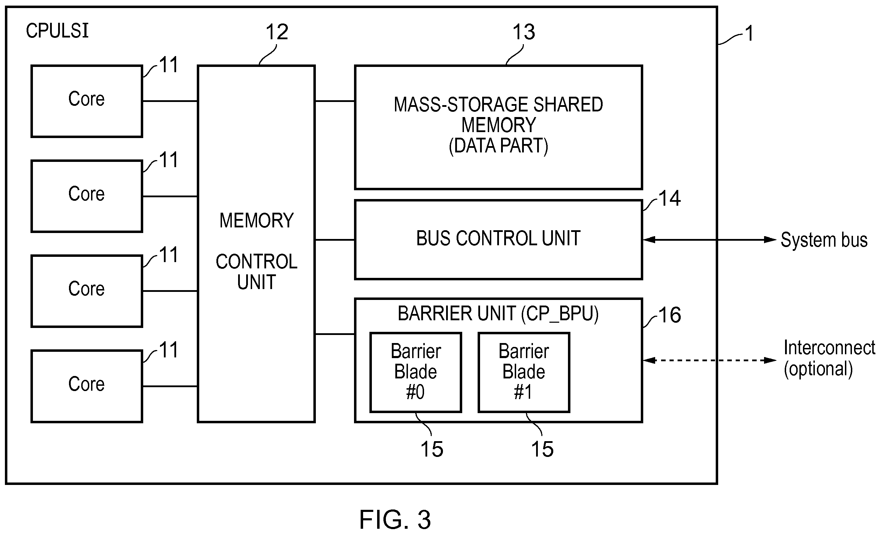

A simplified block diagram of a processor suitable for providing each node 1, and based on the SPARC64 VIIIfx processor, is shown in Figure 3. In this simplified example there are four cores 11 (the actual SPARC64 VIIIfx has eight cores) each sharing a common memory 13 via a memory control unit 12. In this type of processor, data is transferred between the cores and the common memory in blocks of fixed size, called cache lines. In addition, Figure 3 shows a bus control unit for controlling access of the cores to the system bus, and a barrier unit 16 containing barrier blades 15 for hardware barrier synchronization as mentioned above.

More generally, cores may share multiple levels of memory and disk storage of the multicore processor, where the more remote the memory/storage, the higher the level. "Prefetching" is a technique of predicting which data is likely to be required next by a core and of bringing it closer (for example from main memory to local cache) before it is actually needed, to reduce waiting time. Prefetching may be not only software initiated (that is, software prefetching) but also hardware-initiated (hardware prefetching, performed at run-time). Conversely, "flushing" refers to emptying a cache or lower-level memory by writing its contents back to a higher-level memory or disk storage. The document "SPARC64 Vlllfx Extensions", Version 15, 26 April 2010, gives many further details about the organisation of the SPARC64 VIIIfx chip.

As mentioned earlier, there is a need to deal with resource contention among cores of a multicore processor (or of a computer system including possibly many such processors) as they compete for shared resources.

US 2010/0275190 A1 discloses a method and a system according to the preamble of each independent claim. The method reduces lock collisions, in which one thread acquires a lock on a critical section of a program requiring exclusive execution in one thread, such that other threads cannot continue execution until the lock is released. It does this by converting program code running in multi-thread to a program causing fewer lock collisions, adding additional code in the form of conditional statements and duplicate branches, so as to provide an execution path avoiding acquisition of a lock.

### Summary of the Invention

According to a first aspect of the present invention, there is provided a processing method of a software application on a computer system having a plurality of processing elements for independently executing instructions, some common hardware resources in the system being accessed by and shared among the processing elements, the method comprising:
compiling source code of the application to obtain a sequence of executable instructions for each processing element by analysing the source code;
automatically identifying, on the basis of analysing the source code, at least one resource contention among the processing elements predicted to result from combinations of accesses to one or more of the common hardware resources to be executed by the processing elements, and inserting, in the sequence of executable instructions obtained by analysing the source code, an additional instruction the presence of which in the sequence at least identifies the resource contention and indicates a specific type of contention;
providing resource contention mitigation means including a plurality of contention status registers each representing a type of resource contention, and contention control means; and
executing the sequence of executable instructions by said processing elements to perform operations in said computer system, wherein
the contention control means, in response to execution of a said additional instruction, reads the contention status register for the contention type specified in the instruction to determine whether a threshold for action in respect of the contention type concerned has been reached and if so, takes a mitigation strategy for the contention type including accessing said one or more of the common hardware resources in a predefined manner.

According to a second aspect of the present invention, there is provided a computer system adapted to perform the above method and comprising:
a plurality of processing elements each operable independently to execute instructions; and
common hardware resources in the system shared among the processing elements;
resource contention mitigation means including a plurality of contention status registers each representing a type of resource contention, and contention control means; wherein:
   the processing elements are arranged to execute the sequence of executable instructions compiled from said source code to perform operations in said computer system, the executable instructions including said additional instructions which have been inserted by analysing the source code and the presence of which at least identifies resource contention among the processing elements for one or more of the common hardware resources and a specific type of resource contention; and
   the contention control means is arranged, in response to execution of a said additional instruction, to read the contention status register for the contention type specified in the instruction to determine whether a threshold for action in respect of the contention type concerned has been reached and if so, to take a mitigation strategy for the contention type including accessing said one or more of the common hardware resources in a predefined manner.

The "processing elements" referred to above are for example the cores of a multicore processor, but may in general be any independently-operable processing units of a chip or computer system. The term "processing element" is therefore to be understood to cover cores, CPUs, cells, nodes and the like.

The additional instruction provided by the present invention is denoted "shrescX" elsewhere in this specification. "Execution" of the additional instruction may simply involve recognising that the instruction identifies a resource contention and notifying the fact to another part of the computer system, possibly resulting in some mitigating action being taken at a system level. Alternatively it may involve the core taking some mitigating action itself.

Preferably, the additional instruction indicates any of:
a specific type of contention;
whether action should be taken for contention mitigation;
what type of action should be taken; and
set and clear of resource contention for a plurality of instructions.

The additional instruction may identify resource contention due to a next instruction in the sequence, or resource contention due to a group of instructions following said additional instruction in the sequence, which is where the above "set" and "clear" indications are employed.

The common hardware resources in respect of which the additional instruction identifies resource contention can include any of:
compute processing elements;
main memory;
cache memory;
disk storage;
barrier resources;
one or more offload engines;
a network interface controller.

Here, the compute processing elements may include any of a graphical processing unit, a floating-point arithmetic unit and an integer arithmetic unit provided in addition to, and shared by, the cores.

Resource contention to main memory, cache memory or disk storage can include any of bandwidth for, access to, and space in, the main memory, cache memory or disk storage.

Additional instructions may further identify resource contention in the form of requirement for power or cooling of the cores.

The above mentioned resource contention mitigation means can include:
a plurality of contention status register means for registering a resource contention affecting a specific core identified by execution of the additional instruction; and
contention control means for receiving inputs from the plurality of contention status register means and determining a need to take mitigating action.

As an example of the above, the "plurality of contention status register means" may be provided by Contention mitigation Blades referred to later, and the "contention control means" may be provided by a Contention Mitigation Control Register and Contention Mitigation Logic described later.

The new instructions may be defined at the Instruction Set Architecture (ISA) level for implementation in hardware with a direct or almost-direct correspondence to instructions in assembly language. The novel instructions of the invention may be used by a program employing a shared-memory model such as OpenMP but may also be used by a program employing a distributed memory model such as MPI. The invention is thus applicable to OpenMP programs, to MPI programs, and to the above mentioned hybrid programming model combining both techniques. MPI programs are relevant as communication between computers takes place which means there will be contention for resources (e.g. memory, buffers, bandwidth on a wire/connection) allowing this to take place. OpenMP programs are relevant as there will be contention for shared resources such as RAM, bandwidth to RAM, caches and shared resources for carrying out arithmetic.

The "computer system" referred to above may be a high-performance computing system made up of tightly-coupled cores. The present invention is also applicable to servers in a distributed network.

Thus, embodiments of the present invention can provide a processing method of a software application on a computer system having a plurality of processing cores for independently executing instructions, some common hardware resources in the system being shared among the cores. Source code for the application is developed by a programmer. The source code of the application is compiled to obtain a sequence of executable instructions for the cores by analysing the source code, identifying at least one resource contention among the cores predicted to result from execution of instructions by the cores, and inserting an additional instruction in the sequence for at least identifying the resource contention. Then the compiled application is run by executing the sequence of executable instructions by said cores to perform operations in said computer system, these operations including action to mitigate the resource contention in response to executing said additional instruction. Results of execution can be collected and fed back to the development process. The method allows possible resource contention to be indicated with automatically as part of the compilation process and mitigated, if necessary, at run-time.

In a specific embodiment, the present invention is applied to resource contention within a single processor (i.e., multicore processor having a number of cores like Figure 3 for example) and intended for use in a wider computer system (possibly with many other multicore processors). Thus, in such a configuration there are both "internal" (on-chip) shared resources and "external" (off-chip) shared resources. As the cores execute instructions, they may encounter one of the novel resource contention mitigation instructions of the invention. A warning is given by a core to the multicore processor as a whole and once a threshold of warnings is reached, mitigating actions may be taken which may entail choosing between different alternatives and strategies. The invention also allows for the cancelling of these warnings when they no longer apply.

In the case of multicore processors with extra capabilities (extended functionality), alternative strategies include using the extra capabilities for accomplishing something which the general purpose processor cores could accomplish, so that a choice is possible and the invention allows this choice to be made in a general manner.

### Brief Description of the Drawings

Reference is made, by way of example only, to the accompanying drawings in which:
Figure 1 illustrates a "fork-and-join" model employed in OpenMP;
Figure 2 schematically shows a cluster system employing multicore nodes;
Figure 3 is a simplified block diagram of a multicore processor used as a node in the system of Figure 2;
Figure 4 illustrates a prior art process of program development;
Figure 5 illustrates a process for program development employing an embodiment of the present invention;
Figure 6 shows hardware barrier blades in the multicore processor of Figure 3; and
Figure 7 shows resource contention logic in the embodiment of the present invention.

### Detailed Description

An embodiment of the present invention will now be described as applied to a program which is the primary program running on a multicore processor supported by operating system support programs, but the invention is also applicable to the situation where many peer programs are executing on a multicore processor supported by operating system support programs. "Operating system support programs" refers to whatever software is needed to implement the invention. Once the invention is implemented, these "operating system support programs" will form a normal part of the OS.

In the preferred embodiment, the proposed invention provides computer processor instructions "shrescX" (where shresc indicates "shared resource contention", and "X" represents the type of contention), inserted by the compiler of a program (software application), and providing a warning of predicted resource contention likely to be caused by execution of one or more succeeding instructions in the as-compiled program. On encountering such an instruction, a core may issue an indication to this effect to other parts of the system or chip. The novel instructions may cause (possibly after intervention by contention mitigation logic, described later) the individual core or processing element to apply a particular strategy so that one or more shared resources are used in a predefined manner. For example, the timing of access to main memory by individual cores may be adjusted to ensure that program execution is optimal. The new instructions are defined at the Instruction Set Architecture (ISA) level for implementation in hardware with a direct or almost-direct correspondence to instructions in assembly language.

As one example, the type of resource contention may be indicated by replacing "X":
"shrescL1" (contention for L1 cache),
"shrescL2" (contention for L2 cache),
"shrescL<n=" (contention for Level <n> cache, e.g. n=3),
"shrescM" (contention for main memory),
"shrescN" (contention for network resources),
"shrescD" (contention for disk).

All other shared resources may be indicated by substituting a unique letter or letters for "X".

The type of contention may also be indicated as data to the generic "shrescX" instruction in the form "shrescX HH HH" where "HH HH" represents hexadecimal for some bit pattern, e.g. "0000 0010". Here, the bit pattern may indicate, for example, a specific resource such as a disk unit.

For simplicity, we describe the "shrescX" instruction as applying as a warning pertaining to the very next instruction but more generally the "shrescX" instruction may be used to set a warning and clear a warning which applies to a series of program machine instructions instead of just one machine instruction. The "shrescX" instruction may in this more general form have set and clear variants: "shrescX_set" and "shrescX_clr".

Not every shrescX need necessarily be acted on; it may be preferred to monitor the indications provided by cores and to take action only in response to the numbers of indications of specific types of resource contention and/or above a certain threshold level. The program itself may be responsible for managing the types of contention being monitored, or an operating system or job scheduling system may be responsible for managing the types of contention monitored. If a warning is given for a type of resource contention not being monitored, the warnings and clear warnings are ignored.

Alternative methods to avoid contention can be seen in the prior art, such as run-time systems to monitor contention and take steps to improve performance, using knowledge of how resources are connected to cores and processing elements to spread resource utilization, under-utilization of cores and processing elements to reduce resource contention. Prior techniques include:-
(a) Program is categorized and executed in a manner reducing contention
(b) Infiniband FECN (Forward Explicit Congestion Notification)/BECN (Backward Explicit Congestion Notification) mechanism indicating congestion
(c) Communication-related processing, usually handled on the CPU, is offloaded to a device responsible for communication
(d) Programmer mitigates contention explicitly during programming

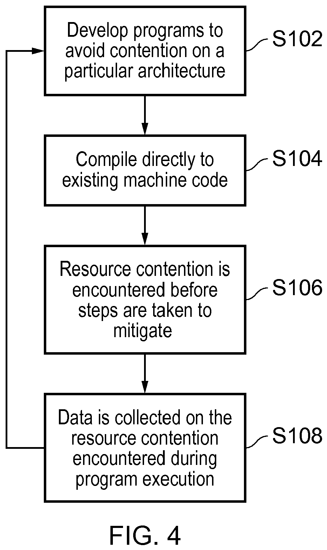

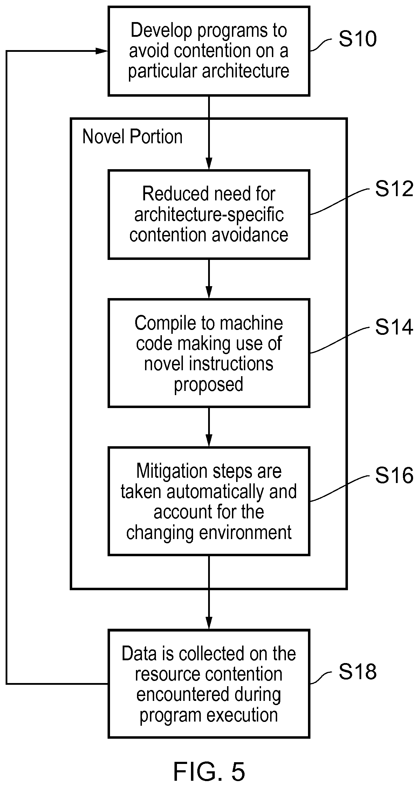

The differences between the prior art (Old Process) and the embodiment (Proposed Process) may be seen by comparing their respective figures, Figures 4 and 5.

In Figure 4, the process begins (S102) with a programmer developing a program by writing source code, with a view to executing the program on a computer system having a particular architecture. The programmer may anticipate that because of the architecture used, certain kinds of resource contention may be likely to occur, and he may design the program appropriately. Next (S104) the source code is compiled into a form more directly executable by the computer system, typically into machine code. Then (S106) the compiled program is tested by executing it on the target system. To the extent that resource contention was not anticipated by the programmer, resource contention will occur. The resource contention can be analyzed by collecting data during execution in any manner known in the art, for example instrumentation or sampling. The data collected is fed back to the development process (S102) so that the programmer can take the data into account in modifying the source code and reduce the resource contention.

Thus, the prior art is reliant on the programmer's experience and knowledge gained from executing prior versions of the program.

By contrast, the present invention (Figure 5) allows the compiler to flag up resource contention and if possible take one or more mitigation steps automatically. As before, the programmer develops a program (S10) paying attention to the resource contention issues likely to be encountered on the particular architecture in use. However, in this case (S12) there is a reduced need for architecture-specific contention avoidance. The source code is compiled (S14) and during compilation, the compiler may identify that resource contention is likely to occur in view of the combinations of actions being instructed to be executed by the cores. For example the compiler may identify that a large number of threads in an OpenMP section of code will lead to simultaneous accesses to main memory. If so, the compiler employs the novel shrescX instructions mentioned above by automatically inserting a shrescX into the machine code at a point in the instruction sequence prior to the instruction to which the resource contention applies.

Where possible (S16) the compilation includes automatically taking steps to avoid or mitigate the resource contention. As before (S18) the compiled program is executed and data is collected on the resource contention encountered, and this data is fed back to the development stage (S10); however the amount of human intervention required can be considerably reduced. For example, the number of iterations of the process (the number of times S18 feeds back to S10) required to arrive at an efficient program, may be reduced.

Having outlined the principle of the invention, the embodiment will be described further in more detail.

The compiler, according to this embodiment, compiles source code (e.g. dense MPI+OpenMP solver or sparse iterative MPI+OpenMP solver), identifies when a certain piece of code is executed with a large number of threads (e.g. using OpenMP), and identifies when resource contention will occur. The compiler inserts inline assembly code to use the "shrescX" instruction or a call to an intrinsic function "_shrescX", if indication of some sort of contention is found.

The types of resource contention recognized are shown in Table 1 below.

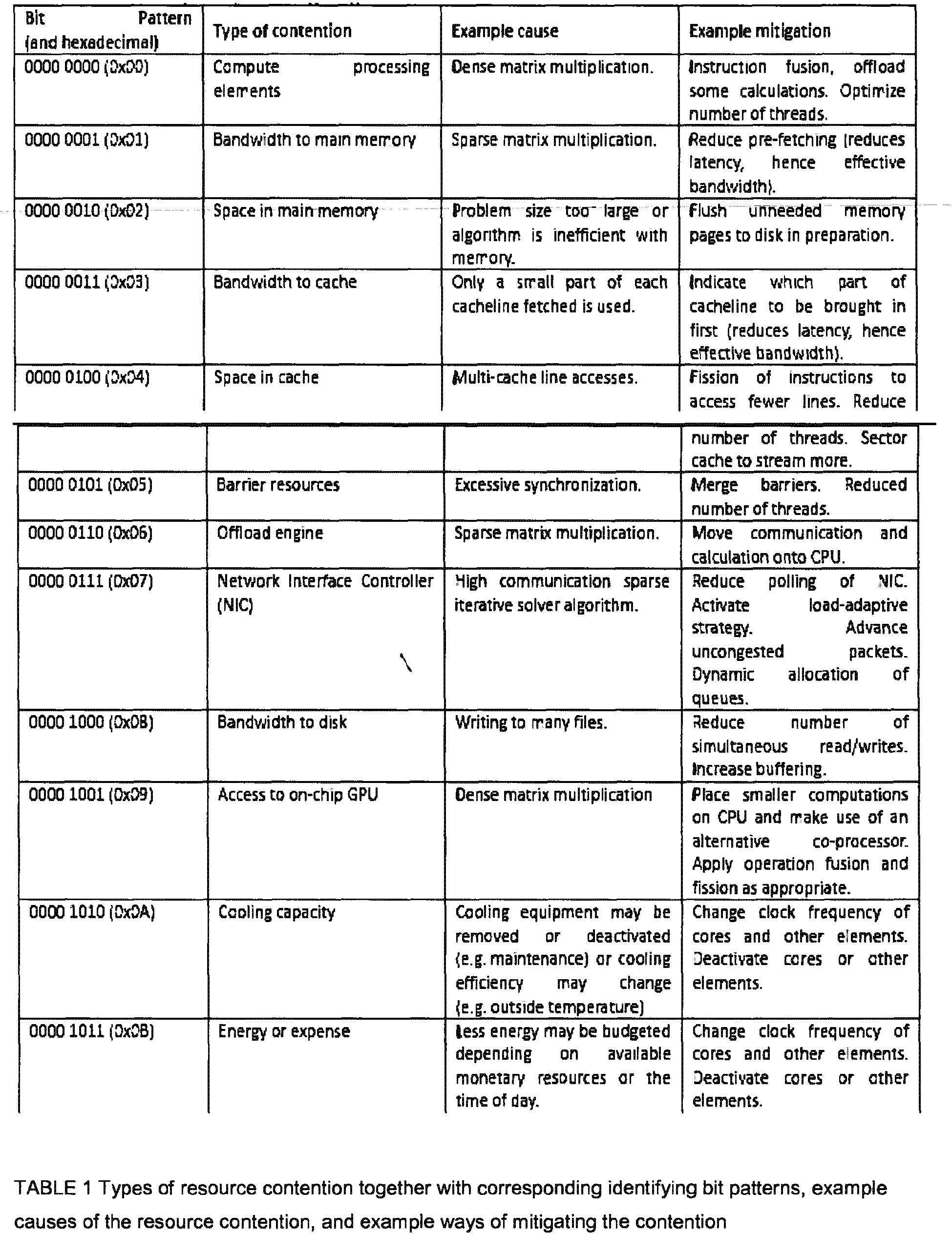

In the above Table, "Compute processing elements" is intended to refer to the hardware which carries out floating point arithmetic: i.e. a floating point scheduler and floating point execution unit. An integer arithmetic unit might also be provided.

"Barrier resources" refers to the above mentioned Hardware Barrier Blades in SPARC64 VIIIfx for example (further described below). There will be contention for barrier blades if the program wishes to perform more synchronization that there are barrier blades available to implement these synchronizations (in the case of the example, when there should be five simultaneous synchronizations when only four barrier blades are available).

As an example of an "offload engine", Fujitsu's K computer employs a large number of SPARC64 VIIIfx nodes, and offloads communication handling from the nodes to an InterConnect Controller chip freeing the nodes from as much communication-related processing as possible. As already mentioned an offload engine may also be implemented in a NIC.

"Access to on-chip GPU" refers to a GPU which may be provided in common for all the cores on a chip (for the avoidance of doubt, SPARC64 Vlllfx does not have such a GPU). Such a GPU could also provide an offload engine for floating-point arithmetic.

To explain further the references to "cooling capacity" and "expense of energy", these factors may cause "resource contention" in a less direct sense than the preceding items in the Table. If execution of many threads/programs is causing an unusually large draw of electricity or causing the computer equipment to become particularly hot (e.g. floating point operations make a considerable part of the work performed by the cores and large amounts of data are moved in and out of RAM), then there can be contention for cooling and money.

The slightly different meaning of "resource contention" in this case does not concern the compiler, which merely needs a list of possible types of contention (e.g. Table 1) and needs to be able to recognize these in the source code. These possible types of contention exist because there are constraints on the system, and in particular there constraints on different types of resources available to the system. In one embodiment, the compiler does not need any further awareness than being able to recognize the types of contention on the list and appropriately marking when these occur. In another embodiment the compiler may have a more active role in recommending some form of mitigating action to be taken at run-time.

The invention is intended to mitigate resource contention for any shared resource that the cores (or processing elements with abilities similar to cores) have access to. Table 1, 0x06 and 0x07 would be mainly applicable to servers in a distributed network. "Communication buffers" would be an alternative shared resource.

In embodiments of the present invention, the compiler and not the programmer is responsible is responsible for identifying possible resource contention. For maximum convenience to the user (programmer), shrescX only occurs at the assembly code level and will have direct or almost direct correspondence to a corresponding instruction at the ISA level and implemented in hardware (the name "shrescX" at all these levels is conflated due to the direct or almost-direct correspondence). The instruction could however also be made accessible at the source code level where it is referred to as an "intrinsic function", below denoted "_shrescX".

The compiler will be programmed to recognize certain scenarios and when one of these is observed in the source code, the novel instruction of the invention will be employed (by inserting the relevant assembly level instruction/assembly mnemonic into the assembly code). In this way the compiler inserts shrescX into a separate sequence of instructions for the cores affected.

In particular the compiler will be programmed to recognize source code which causes the types of resource contention in Table 1. For a simple implementation, the compiler will indicate resource contention in an OpenMP program when all cores are instructed to carry out vectorized operations and vectorized arithmetic (e.g. SSE, SSE2, SSE3). The simple implementation will indicate resource contention in an MPI program when very many messages are being sent in succession and when very large messages are being sent (it will be determined at run-time whether any mitigating steps should be taken). "All cores are instructed to carry out vectorized operations and vectorized arithmetic", "very many messages are being sent in succession" and "very large messages are being sent" are examples of scenarios recognized by the compiler.

Thus, the compiler will insert inline assembly code to use the "shrescX" instruction or a call to an intrinsic function "_shrescX", if indication of some sort of contention is found. That is, in the first instance the compiler inserts all the required code directly into the compile code and in the second, inserts a call to an external function.

The compiler may give an operand value (e.g. "val16" - a 16-bit operand value) to the instruction "shrescX" to indicate the type of contention, whether action should be taken to mitigate the contention and what type of action should be taken. The first 8-bits represent the type of contention and the correspondence between bit pattern and type of contention is show in the table above. The next 8-bits are reserved for future optimization of contention mitigation when a specific strategy is requested. The use of an operand value to indicate the type of resource contention is shown in Table 2 as the insertion of explicit inline assembly code whereas it is more usual for the compiler to recognize the situation and insert the instruction without user intervention.

**TABLE 2 OpenMP thread parallelization of code using software-initiated prefetching**

| |
|---|
| ```
 #pragma omp parallel for
 for (i=0; i<N; i+=8) {
    asm("shrescX 0x01"); // Instruction indicating contention for memory.
     mm prefetch((char *) &a[i+AHEAD], MM HINT T0);
    sum0 += a[i+0];
    sum1 += a[i+1];
    sum2 += a[i+2];
    sum3 += a[i+3];
    sum0 += a[i+4];
    sum1 += a[i+5];
    sum2 += a[i+6];
    sum3 += a[i+7];
 }
``` |

For a large number of cores, it is possible that having all cores pre-fetch will result in lower performance so the "shrescX" instruction is used to indicate possible contention for bandwidth to main memory. This allows the multicore processor (or more precisely, a software process for resource contention, running on the multicore processor) -to mitigate contention for main memory bandwidth by, for example, pre-fetching on only some of the loop iterations, pre-fetching from only a subset of cores or performing no pre-fetching. Thus, the compiler flags up the need for mitigating action, but the mitigating action itself will take place at run-time and should be configurable (mitigation may be deactivated or different mitigation strategies may be selected).

An example of intensive communication using resource contention is shown in Table 3 below, where the present invention allows the processor to mitigate for the contention.

**TABLE 3 Example of intensive communication using resource contention**

| |
|---|
| ```
 #pragma omp parallel sections
 {
    #pragma omp section
    {
       asm("shrescX 0x06"); // Instruction indicating contention.
       // Many communication operations.
     }
// Many communication sections,
 // ...
    #pragma omp section
    {
       asm("shrescX 0x06"); // Instruction indicating contention.
       // Many communication operations.
    }
    #pragma omp section
    {
       // Few floating point operations.
    }
 }
``` |

The code in Table 3 is an illustration of OpenMP sections with many communication operations taking place in many threads, so that there will be contention for the communication offload engine. The "shrescX" instruction allows individual threads and cores to mitigate the contention by processing the communication on the CPU as much as possible.

Further details will now be given of how the shrescX instruction interacts with hardware and software prefetching (as shown in Table 2) on the SPARC64 Vlllfx and the x86-based architecture.

As already mentioned, the SPARC64 VIIIfx chip includes Hardware Barrier Resources, including Hardware Barrier Blades for synchronization which are shared by the cores on the chip (see Fig. 3).

As illustrated in Fig. 3, a processor 1 includes four processor cores 11 (labelled "core" in Fig. 3), each including various units for executing or decoding instructions, registers, cache memory, and the like. Each of the cores 11 is connected to a shared cache control unit 12, and is configured to access or transmit and receive data to and from mass-storage shared cache memory (data port) 13, a bus control unit 14, and a barrier unit 16. A barrier synchronization device according to the present embodiment is realized in the form of the barrier unit 16.

When all the cores 11 belonging to the same synchronization group are in the corresponding processor 1, the barrier unit 16 performs a process for realizing barrier synchronization of that synchronization group. Thereby, the necessity of transmitting and receiving data to and from devices out of the processor 1 to realize the barrier synchronization is eliminated. Barrier synchronization is realized in the processor 1 and data transmission/reception, which is slower than the processing speed in the processor, is not performed so that the process for that barrier synchronization can be performed at very high speed.

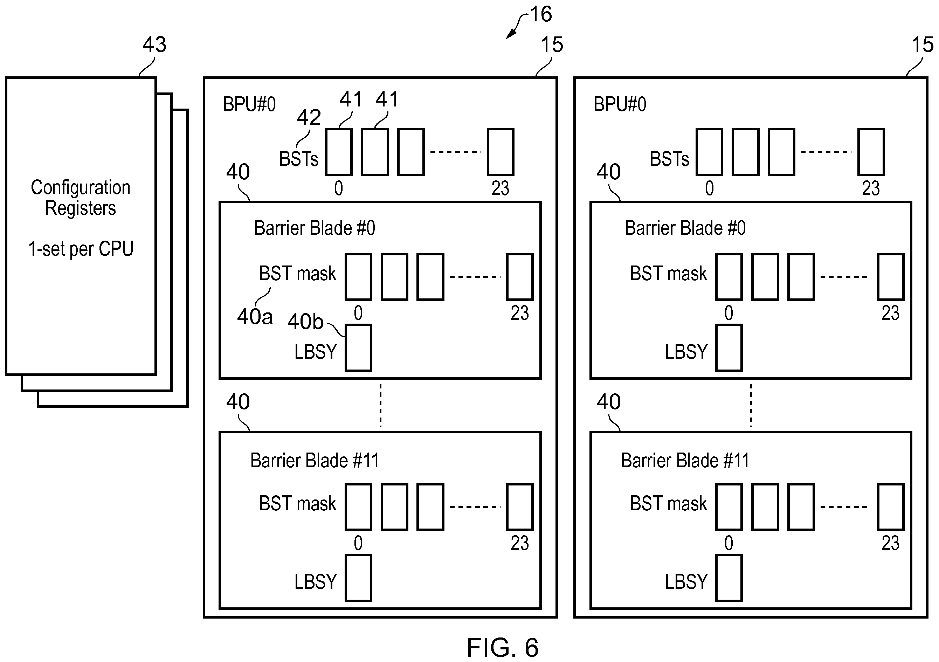

Fig. 6 illustrates a configuration of the barrier unit 16. Each core 11 provides two "logical processors" (not to be confused with "processors" in the sense of multicore chips). The barrier unit 16 includes two barrier processing devices 15 and as many configuration registers 43 as there are logical processors (virtual cores that can be recognized by the OS). Each of the barrier processing devices 15 includes a BST group 42 having plural BSTs (Barrier STatus registers), and also includes plural barrier blades 40, each of which can execute a synchronization process of one synchronization group.

Each of the BSTs 41 constituting the BST group 42 is assigned a different logical processor. The BSTs 41 are registers for storing one-bit data. Each logic processor (core 11 to which that logic processor is assigned) writes "1" upon the termination of the execution of a process to be executed as parallel processing, and writes "0" upon the starting of the execution of the next process. Thereby, the value of the BST 41 represents the execution status of a process of the corresponding logic processor. The point at which the value changes from 0 to 1 indicates the fact that a waiting state has started in order to realize synchronization with another logic processor that belongs to the same synchronization group.

The barrier blade 40 includes a BST mask register 40a that can hold as many bits as the total number of the BSTs 41, an LBSY (Last Barrier Synchronization register) 40b, and an LBSY update logic (circuit) 40c. The BST mask register 40a stores combination data representing a combination of logic processors belonging to the synchronization group assigned to the barrier blade 40. For example, the bit values, in combination data, corresponding to a logic processor belonging to the synchronization group and corresponding to a logic processor not belonging to the synchronization group are 1 and 0, respectively. The LBSY update logic 40c uses only the value of the BST 41 assigned to the logic processor belonging to the synchronization group in the BST group 42 on the basis of the BST mask register 40a holding combination data such as described above so that the LBSY update logic 40c can update the value of the LBSY 40b (LBSY value). This update is performed by writing to the LBSY 40b NOT of the current LBSY value (when the current LBSY value is 0, 1 is written and when the value is 1, 0 is written) when the values of all the BSTs 41 as targets are identical.

Further details of hardware barrier blades in SPARC64 Vlllfx are given in Appendix L of the above-mentioned SPARC64 Vlllfx Extensions document.

When applying the present invention to such a chip, it is possible to provide Contention Mitigation Coordination Resources (CMCR) analogous to the SPARC64 VIIIfx Hardware Barrier Resources. These could in fact be the Hardware Barrier Blades themselves: the so-called "blades" essentially consist of registers (Address Space Identifier Registers) capable of use for other purposes.

In any case, it is envisaged that the CMCR will be a set of resources present on-chip and shared by all cores. Preferably, a number of Contention Mitigation Blades are present on-chip with each blade used to represent a respective type of resource contention, and providing register means which are kept consistent between cores. In addition, a Contention Mitigation Control Register, separate from the Contention Mitigation Blades, will be provided, one per multicore processor (chip). Contention Mitigation Logic (in the form of a hardware circuit, chip-level software process, or a combination of the two) manages the Contention Mitigation Control Register and Contention Mitigation Blades.

The "Content Mitigation Coordination Resources" comprises of "Content Mitigation Blades", the equivalent term used in the claims being "contention status register means". The "Content Mitigation Control Register" is separate from these Blades because there is only one per multicore processor. Incidentally, the term "Register" is used for convenience but how the data is actually stored is not important.

A number of bits equal to or greater than the number of cores are used as the Contention Status bits (CST analogous to the barrier status bits, BST) to indicate which cores have indicated contention (in other words, which cores have executed a shrescX instruction) for the resource represented by the Contention Mitigation Blade, and the same number of bits are used in the Contention Status Bit Mask (CST_mask analogous to the barrier status bit mask, BST_mask) which indicate which cores are active in the current part of the computation. A Last Mitigation Synchronization bit (LMSY, analogous to the last barrier synchronization bit, LBSY) is set to "1" if all cores involved have indicated contention for the resource or "0" if previously indicated contention has ceased; LMSY and all CST bits are initialized to "0" to indicate no resource contention.

Once all CST bits selected by CST_mask are set to "1", LMSY is set to "1" in the same atomic operation. Once the LMSY bit is updated, the Contention Mitigation Logic reads the LMSY bit and activates/deactivates other features of the multicore processor according to the Contention Mitigation Control Register.

The Contention Mitigation Control Register (one of which is provided on-chip, in common for all cores) is set separately to determine both the kinds of mitigation to act upon, and what action to take. That is, the Control Register contains bits which determine the types of resource contention subject to contention mitigation, the default strategy for contention mitigation and which types of contention will raise a Resource Contention Exception so that an exception handler (perhaps at the kernel, operating system scheduler or user level) can employ a high-level strategy for mitigating resource contention. If resource contention for memory bandwidth is indicated by all cores, bits 18 and 17 of the SPARC64 Vlllfx Memory Control Register ASI_MCNTL can be set to "01" so that no hardware prefetching is performed. For the Intel 64 and IA-32 architectures, the CD flag (bit 30 of control register CR0) can be set so that caching is disabled for the whole of system memory (Intel64 and IA-32 Architectures Software Developer's Manual Volume 3, hereby incorporated by reference); The SPARC64 and x86 prefetch instructions could be further modified to directly access the Contention Mitigation Control Register and perform less prefetching if memory bandwidth contention has been indicated.

Once execution leaves a region of resource contention, the shrescX instruction may be given a 16-bit value indicating the resource contention in the first 8-bits and a bit will be set in the last 8-bits to indicate that the previously indicated resource contention is no longer present. Once this has been indicated by all cores involved in the computation, the LMSY bit is updated so that the Contention Mitigation Logic is able to reverse the steps taken to mitigate resource contention (bits in the Contention Mitigation Control Register may be used to store the initial state of the processor, e.g. processor prefetching mode, before resource mitigation took place).

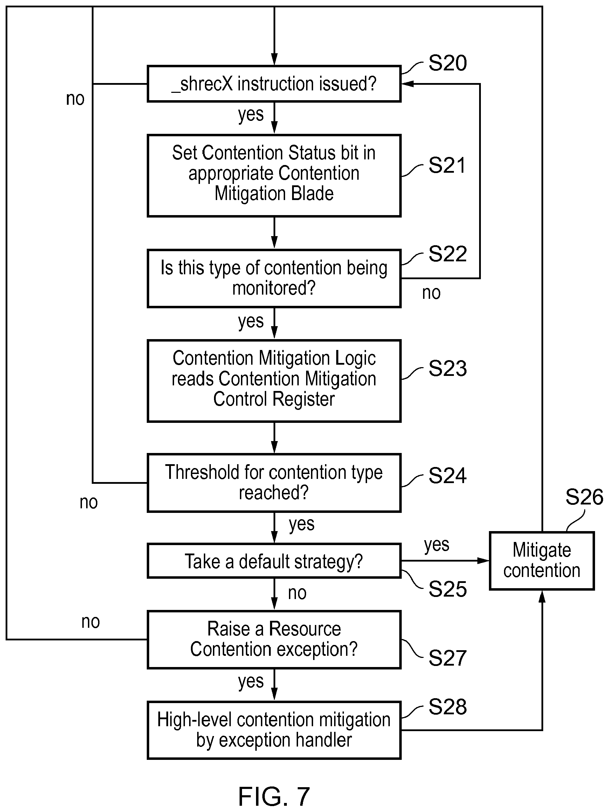

The algorithm followed by the Contention Mitigation Logic is shown in Figure 7. The algorithm is performed at chip level to deal with resource contention among the cores on the chip.

Firstly, in a step S20 it is checked whether any core executes a shrescX instruction. If so, then the corresponding Contention Status bit is set (S21) in the Contention Mitigation Blade for the kind of resource contention which is the subject of the shrescX instruction. Next (S22), it is checked whether or not that type of resource contention is being monitored and if not the process returns to the start. If that type of resource contention is being monitored (S22, "yes") then the algorithm proceeds to S23 in which the Contention Mitigation Logic reads the Contention Mitigation Control Register. If the threshold for action in respect of the resource contention type concerned has not yet been reached, a counter is incremented and the algorithm returns to the start. Here, the threshold is determined by an operating system support program which evaluates the hardware specifications and sets default, user-modifiable thresholds appropriately. The threshold values should in the first instance be set in RAM but must be readily available on the multicore processor so either it must be in cache or other provision must be made for fast access to this data.

On the other hand, if the threshold for that contention type has been reached (S24, "yes"), then it is determined whether or not to take a default strategy (step S25) and if so, a step of contention mitigation (S26) is carried out according to the default strategy (S26). Referring back to Table 1, any of the "Example mitigations" listed there could be defined as the default strategy for the contention type concerned.

Otherwise (S25, "no") it is determined whether to raise a Resource Contention exception in step S27, in other words a software interrupt to flag an exception which cannot be handled within the program.. If not, the flow returns to the start. Otherwise, (S27, "yes") a step is taken of high-level contention mitigation by an exception handler.

In Figure 7, the basic shrescX instruction applying to the next instruction is shown but the application in a set and clear implementation is simply the above diagram applying to "shrescX_set". If the corresponding type of contention is being monitored, "shrescX_clr" clears the appropriate bit, otherwise does nothing.

Various modifications of the invention are possible within the scope of the claims.

In particular, an embodiment has been described in relation to a multicore processor having a plurality of cores, but the present invention is applicable in many other configurations such as a distributed network of servers or a system of nodes. As already mentioned the term "core" is to be understood as embracing any kind of processing element having some capability of independently executing instructions.

Advantages of the invention include the following.

The invention will allow better scheduling of instructions on computer processors. For a very small number of cores, the advantage of the invention is small but as the number of cores becomes large, the advantage becomes large. The invention does not involve a software run-time system and does not require application-writer involvement which greatly increases ease of use. The invention can be used by compiler writers to give OpenMP functionality which will avoid resource contention without creating a large number of different functions for different cores and without requiring many branches in software.

The invention allows information discovered by the compiler to be used to reduce resource contention whereas current compilers do not use this information, and instead generate object code which cannot coordinate between cores to reduce resource contention unless the programmer expends time and money to implement this.

To summarise, embodiments of the present invention provide a unified strategy for indicating and mitigating many different types of resource contention, in the form of multicore processor instructions used to indicate specific types of resource contention and allowing mitigation. This is different from the prior art which uses narrow contention-avoidance strategy such as communication off-loading to avoid contention.

### Industrial Applicability

The present invention allows a single apparatus and method to address many types of resource contention in a multicore processor, and allows information regarding resource contention discovered by the compiler to be indicated to the multicore processor. The instructions allow local mitigation at the level of individual cores and threads without a run-time measurement of resource contention as in the prior art.

## Claims

1. A processing method of a software application on a computer system (1) having a plurality of processing elements (11) for independently executing instructions, some common hardware resources (13, 14, 16) in the system being accessed by and shared among the processing elements (11), the method comprising:
compiling source code of the application to obtain a sequence of executable instructions for each processing element (11) by analysing the source code;
automatically identifying, on the basis of analysing the source code, at least one resource contention among the processing elements (11) predicted to result from combinations of accesses to one or more of the common hardware resources to be executed by the processing elements, and inserting, in the sequence of executable instructions obtained by analysing the source code, an additional instruction the presence of which in the sequence at least identifies the resource contention and indicates a specific type of contention;
providing resource contention mitigation means including a plurality of contention status registers each representing a type of resource contention, and contention control means; and
executing the sequence of executable instructions by said processing elements (11) to perform operations in said computer system, wherein
the contention control means, in response to execution of a said additional instruction, reads the contention status register for the contention type specified in the instruction to determine whether a threshold for action in respect of the contention type concerned has been reached and if so, takes a mitigation strategy for the contention type including accessing said one or more of the common hardware resources in a predefined manner.

2. A computer system (1) adapted to perform the method according to claim 1 and comprising:
a plurality of processing elements (11) each operable independently to execute instructions; and
common hardware resources (13, 14, 16) in the system shared among the processing elements;
resource contention mitigation means including a plurality of contention status registers each representing a type of resource contention, and contention control means; wherein:
the processing elements (11) are arranged to execute the sequence of executable instructions compiled from said source code to perform operations in said computer system (1), the executable instructions including said additional instructions which have been inserted by analysing the source code and the presence of which at least identifies resource contention among the processing elements for one or more of the common hardware resources (13, 14, 16) and indicates a specific type of resource contention; and
the contention control means is arranged, in response to execution of a said additional instruction, to read the contention status register for the contention type specified in the instruction to determine whether a threshold for action in respect of the contention type concerned has been reached and if so, to take a mitigation strategy for the contention type including accessing said one or more of the common hardware resources in a predefined manner.

3. A computer system according to claim 2 further comprising at least one multicore processor providing the plurality of processing elements in the form of cores each operable independently to execute instructions;
said common hardware resources comprising internal common hardware resources internal to the multicore processor which are shared among the processing elements, and external common hardware resources of the computer system;
the multicore processor further comprising input/output means for communication with external common hardware resources of the computer system.

4. The method or system according to any preceding claim wherein the additional instruction identifies resource contention due to a next instruction in the sequence.

5. The method or system according to any of claims 1 to 3 wherein the additional instruction identifies resource contention due to a group of instructions following said additional instruction in the sequence.

6. The method or system according to any preceding claim wherein the common hardware resources in respect of which the additional instruction identifies resource contention include any of:
compute processing elements;
main memory;
cache memory;
disk storage;
barrier resources;
one or more offload engines;
a network interface controller.

7. The method or system according to claim 6 wherein the compute processing elements include any of a graphical processing unit, a floating-point arithmetic unit and an integer arithmetic unit provided in addition to, and shared by, the processing elements and accessing said one or more of the common hardware resources in a predefined manner in response to executing said additional instruction includes moving communication and/or calculations from a said graphical processing unit, floating-point arithmetic unit or integer arithmetic unit to another graphical processing unit, floating-point arithmetic unit or integer arithmetic unit or to said processing elements.

8. The method or system according to claim 6 wherein resource contention to main memory, cache memory or disk storage includes any of bandwidth for, access to, and space in, the main memory, cache memory or disk storage and accessing said one or more of the common hardware resources in a predefined manner in response to executing said additional instruction includes reducing an amount of pre-fetching from main memory or disk storage, flushing unnecessary pages of main memory to disk storage, indicating part of a cache line to bring into cache, fissioning instructions to access fewer cache lines, or reducing a number of simultaneously reads or writes.

9. The method or system according to claim 6 wherein the common hardware resources include the network interface controller and accessing said one or more of the common hardware resources in a predefined manner in response to executing said additional instruction includes reducing polling of the network interface controller

10. The method or system according to any preceding claim wherein the additional instructions further identify resource contention in the form of requirement for power or cooling of the processing elements accessing said one or more of the common hardware resources in a predefined manner in response to executing said additional instruction includes changing a clock frequency of, or deactivating, processing elements.

11. The method or system according to any preceding claim wherein the additional instruction further indicates at least one of:
whether action should be taken for contention mitigation;
what type of action should be taken; and
a group of instructions to which the resource contention applies.

## Patentansprüche

1. Verarbeitungsverfahren einer Softwareanwendung auf einem Computersystem (1) mit einer Vielzahl von Verarbeitungselementen (11) zum unabhängigen Ausführen von Anweisungen, wobei die Verarbeitungselemente (11) auf einige gemeinsame Hardwareressourcen (13, 14, 16) im System zugreifen und diese gemeinsam verwenden, wobei das Verfahren Folgendes umfasst:
Kompilieren von Quellcode der Anwendung, um durch Analysieren des Quellcodes eine Sequenz von ausführbaren Anweisungen für jedes Verarbeitungselement (11) zu erhalten;
automatisches Identifizieren von mindestens einem Ressourcenkonflikt unter den Verarbeitungselementen (11), über den vorausgesagt wird, dass er aus Kombinationen von Zugriffen auf eine oder mehrere der gemeinsamen Hardwareressourcen, die von den Verarbeitungselementen auszuführen sind, resultiert, auf Basis des Analysierens des Quellcodes und Einfügen einer zusätzlichen Anweisung, deren Vorhandensein in der Sequenz mindestens den Ressourcenkonflikt identifiziert und einen speziellen Typ von Konflikt anzeigt, in die Sequenz von ausführbaren Anweisungen, die durch Analysieren des Quellcodes erhalten werden;
Bereitstellen von Ressourcenkonfliktminderungsmitteln, die eine Vielzahl von Konfliktstatusregistern beinhalten, von denen jedes einen Typ des Ressourcenkonflikts repräsentiert, und von Konfliktsteuermitteln und
Ausführen der Sequenz von ausführbaren Anweisungen durch die Verarbeitungselemente (11), um Operationen im Computersystem durchzuführen, wobei
die Konfliktsteuermittel in Reaktion auf die Ausführung der zusätzlichen Anweisung das Konfliktstatusregister für den in der Anweisung spezifizierten Konflikttyp liest, um zu bestimmen, ob ein Schwellwert für eine Aktion mit Bezug auf den betreffenden Konflikttyp erreicht wurde, und, wenn ja, eine Minderungsstrategie für den Verbindungstyp ergreift, die das Zugreifen auf eine oder mehrere der gemeinsamen Hardwareressourcen in einer vordefinierten Weise beinhaltet.

2. Computersystem (1), das angepasst ist, das Verfahren nach Anspruch 1 durchzuführen, und Folgendes umfasst:
eine Vielzahl von Verarbeitungselementen (11), von denen jedes unabhängig betreibbar ist, Anweisungen auszuführen; und
gemeinsame Hardwareressourcen (13, 14, 16) im System, die von den Verarbeitungselementen gemeinsam verwendet werden;
Ressourcenkonfliktminderungsmittel, die eine Vielzahl von Konfliktstatusregistern beinhalten, von denen jedes einen Typ des Ressourcenkonflikts repräsentiert, und Konfliktsteuermittel; wobei:
die Verarbeitungselemente (11) angeordnet sind, die Sequenz von ausführbaren Anweisungen, die aus dem Quellcode kompiliert werden, auszuführen, um Operationen im Computersystem (1) durchzuführen, wobei die ausführbaren Anweisungen die zusätzlichen Anweisungen beinhalten, die durch Analysieren des Quellcodes eingefügt werden und deren Vorhandensein mindestens einen Ressourcenkonflikt unter den Verarbeitungselementen für eine oder mehrere der gemeinsamen Hardwareressourcen (13, 14, 16) identifiziert und einen spezifischen Typ von Ressourcenkonflikt anzeigt; und
die Konfliktsteuermittel in Reaktion auf die Ausführung der zusätzlichen Anweisung angeordnet sind, das Konfliktstatusregister für den in der Anweisung spezifizierten Konflikttyp zu lesen, um zu bestimmen, ob ein Schwellwert für eine Aktion mit Bezug auf den betreffenden Konflikttyp erreicht wurde, und, wenn ja, eine Minderungsstrategie für den Verbindungstyp zu ergreifen, die das Zugreifen auf eine oder mehrere der gemeinsamen Hardwareressourcen in einer vordefinierten Weise beinhaltet.

3. Computersystem nach Anspruch 2, das ferner mindestens einen Mehrkernprozessor umfasst, der eine Vielzahl von Verarbeitungselementen in Form von Kernen bereitstellt, von denen jeder unabhängig betreibbar ist, Anweisungen auszuführen;
wobei die gemeinsamen Hardwareressourcen interne gemeinsame Hardwareressourcen im Mehrkernprozessor, die von den Verarbeitungselementen gemeinsam verwendet werden, und externe gemeinsame Hardwareressourcen des Computersystems umfassen;
wobei der Mehrkernprozessor ferner Eingabe-/Ausgabemittel für die Kommunikation mit externen gemeinsamen Hardwareressourcen des Computersystems umfasst.

4. Verfahren oder System nach einem der vorhergehenden Ansprüche, wobei die zusätzliche Anweisung einen Ressourcenkonflikt durch eine nächste Anweisung in der Sequenz identifiziert.

5. Verfahren oder System nach einem der Ansprüche 1 bis 3, wobei die zusätzliche Anweisung einen Ressourcenkonflikt durch eine Gruppe von Anweisungen, die der zusätzlichen Anweisung in der Sequenz folgen, identifiziert.

6. Verfahren oder System nach einem der vorhergehenden Ansprüche, wobei die gemeinsamen Hardwareressourcen, bezüglich derer die zusätzliche Anweisung einen Ressourcenkonflikt identifiziert, beliebiges von Folgendem beinhalten:
Berechnungsverarbeitungselemente;
Hauptspeicher;
Cachespeicher;
Datenträgerspeichereinheit;
Barriereressourcen;
eine oder mehrere Entlastungsmaschinen;
eine Netzwerkschnittstellensteuerung.

7. Verfahren oder System nach Anspruch 6, wobei die Berechnungsverarbeitungselemente eines von einer grafischen Verarbeitungseinheit, einer Gleitkommaarithmetikeinheit und einer Ganzzahlarithmetikeinheit beinhalten, die zusätzlich zu den Verarbeitungselementen bereitgestellt und von diesen gemeinsam verwendet werden, und das Zugreifen auf die eine oder die mehreren gemeinsamen Hardwareressourcen in einer vordefinierten Weise in Reaktion auf das Ausführen der zusätzlichen Anweisung das Bewegen einer Kommunikation und/oder von Kalkulationen von einer grafischen Verarbeitungseinheit, einer Gleitkommaarithmetikeinheit oder einer Ganzzahlarithmetikeinheit zu einer anderen grafischen Verarbeitungseinheit, Gleitkommaarithmetikeinheit oder Ganzzahlarithmetikeinheit oder zu den Verarbeitungselementen beinhaltet.

8. Verfahren oder System nach Anspruch 6, wobei ein Ressourcenkonflikt am Hauptspeicher, am Cachespeicher oder an der Datenträgerspeichereinheit eines von der Bandbreite für den Hauptspeicher, den Cachespeicher oder die Datenträgerspeichereinheit bzw. vom Zugriff auf diese bzw. von Platz in diesen beinhaltet und das Zugreifen auf die eine oder die mehreren der gemeinsamen Hardwareressourcen in einer vordefinierten Weise in Reaktion auf das Ausführen der zusätzlichen Anweisung das Reduzieren einer Menge des Vorababrufens aus dem Hauptspeicher oder von der Datenträgerspeichereinheit, das Übergeben von unnötigen Seiten vom Hauptspeicher an die Datenträgerspeichereinheit, das Anzeigen eines Teils einer Cachezeile zum Einfügen in den Cache, das Aufspalten von Anweisungen, um auf weniger Cachezeilen zuzugreifen, oder das Reduzieren einer Anzahl von gleichzeitigen Lese- oder Schreibvorgängen beinhaltet.

9. Verfahren oder System nach Anspruch 6, wobei die gemeinsamen Hardwareressourcen die Netzwerkschnittstellensteuerung beinhalten und das Zugreifen auf die eine oder die mehreren gemeinsamen Hardwareressourcen in einer vordefinierten Weise in Reaktion auf das Ausführen der zusätzlichen Anweisung das Reduzieren des Abfragens der Netzwerkschnittstellensteuerung beinhaltet.

10. Verfahren oder System nach einem der vorhergehenden Ansprüche, wobei die zusätzlichen Anweisungen ferner einen Ressourcenkonflikt in Form einer Anforderung von Leistung oder Kühlung der Verarbeitungselemente identifizieren Zugreifen auf die eine oder die mehreren gemeinsamen Hardwareressourcen in einer vordefinierten Weise in Reaktion auf das Ausführen der zusätzlichen Anweisung das Ändern einer Taktfrequenz von Verarbeitungselementen oder das Deaktivieren von diesen beinhaltet.

11. Verfahren oder System nach einem der vorhergehenden Ansprüche, wobei die zusätzliche Anweisung ferner mindestens eines von Folgendem anzeigt:
ob zur Konfliktminderung eine Aktion vorgenommen werden sollte;
welcher Typ von Aktion vorgenommen werden sollte und
eine Gruppe von Anweisungen, für die der Ressourcenkonflikt gilt.

## Revendications

1. Procédé de traitement d'une application logicielle sur un système informatique (1) ayant une pluralité d'éléments de traitement (11) pour exécuter indépendamment des instructions, certaines ressources matérielles communes (13, 14, 16) dans le système étant accessibles et étant partagées par les éléments de traitement (11), le procédé comprenant les étapes consistant à :
compiler le code source de l'application pour obtenir une séquence d'instructions exécutables pour chaque élément de traitement (11) en analysant le code source ;
identifier automatiquement, sur la base de l'analyse du code source, au moins un conflit de ressources parmi les éléments de traitement (11) prévu pour résulter de combinaisons d'accès à une ou plusieurs des ressources matérielles communes à exécuter par les éléments de traitement, et insérer, dans la séquence d'instructions exécutables obtenue en analysant le code source, une instruction supplémentaire dont la présence dans la séquence identifie au moins le conflit de ressources et indique un type spécifique de conflit ;
fournir des moyens d'atténuation de conflit de ressources comprenant une pluralité de registres d'état de conflit représentant chacun un type de conflit de ressources, et des moyens de commande de conflit ; et
exécuter la séquence d'instructions exécutables par lesdits éléments de traitement (11) pour effectuer des opérations dans ledit système informatique, dans lequel
les moyens de commande de conflit, en réponse à l'exécution d'une dite instruction supplémentaire, lisent le registre d'état de conflit pour le type de conflit spécifié dans l'instruction afin de déterminer si un seuil d'action concernant le type de conflit concerné a été atteint et si c'est le cas, adopte une stratégie d'atténuation pour le type de conflit comprenant l'accès auxdites une ou plusieurs des ressources matérielles communes d'une manière prédéfinie.

2. Système informatique (1) adapté pour effectuer le procédé selon la revendication 1 et comprenant :
une pluralité d'éléments de traitement (11) opérationnels indépendamment chacun pour exécuter des instructions ; et
des ressources matérielles communes (13, 14, 16) dans le système partagées par les éléments de traitement ;
des moyens d'atténuation de conflit de ressources comprenant une pluralité de registres d'état de conflit représentant chacun un type de conflit de ressources, et des moyens de commande de conflit ; dans lequel :
les éléments de traitement (11) sont conçus pour exécuter la séquence d'instructions exécutables compilées à partir dudit code source pour effectuer des opérations dans ledit système informatique (1), les instructions exécutables comprenant lesdites instructions supplémentaires qui ont été insérées en analysant le code source et dont la présence identifie au moins un conflit de ressources parmi les éléments de traitement pour une ou plusieurs des ressources matérielles communes (13, 14, 16) et indique un type spécifique de conflit de ressources ; et
les moyens de commande de conflit sont conçus, en réponse à l'exécution d'une dite instruction supplémentaire, pour lire le registre d'état de conflit pour le type de conflit spécifié dans l'instruction afin de déterminer si un seuil d'action concernant le type de conflit concerné a été atteint et si c'est le cas, pour adopter une stratégie d'atténuation pour le type de conflit comprenant l'accès auxdites une ou plusieurs des ressources matérielles communes d'une manière prédéfinie.

3. Système informatique selon la revendication 2, comprenant en outre au moins un processeur multicœur fournissant la pluralité d'éléments de traitement sous la forme de cœurs opérationnels indépendamment chacun pour exécuter des instructions ;
lesdites ressources matérielles communes comprenant des ressources matérielles communes internes à l'intérieur du processeur multicœur qui sont partagées par les éléments de traitement, et des ressources matérielles communes externes du système informatique ;
le processeur multicœur comprenant en outre des moyens d'entrée/sortie pour communiquer avec des ressources matérielles communes externes du système informatique.

4. Procédé ou système selon l'une quelconque des revendications précédentes, dans lequel l'instruction supplémentaire identifie un conflit de ressources dû à une instruction suivante dans la séquence.

5. Procédé ou système selon l'une quelconque des revendications 1 à 3, dans lequel l'instruction supplémentaire identifie un conflit de ressources dû à un groupe d'instructions suivant ladite instruction supplémentaire dans la séquence.

6. Procédé ou système selon l'une quelconque des revendications précédentes, dans lequel les ressources matérielles communes pour lesquelles l'instruction supplémentaire identifie un conflit de ressources comprennent l'un quelconque parmi :
des éléments de traitement informatiques ;
une mémoire principale ;
une mémoire cache ;
un stockage sur disque ;
des ressources de barrière ;
un ou plusieurs moteurs de transfert ;
un dispositif de commande d'interface réseau.

7. Procédé ou système selon la revendication 6, dans lequel les éléments de traitement informatiques comprennent l'une quelconque parmi une unité de traitement graphique, une unité arithmétique à virgule flottante et une unité arithmétique de nombres entiers fournie en plus des éléments de traitement, et partagée par ceux-ci, et l'accès auxdites une ou plusieurs des ressources matérielles communes d'une manière prédéfinie en réponse à l'exécution de ladite instruction supplémentaire comprend le passage d'une communication et/ou de calculs depuis une dite unité de traitement graphique, unité arithmétique à virgule flottante ou unité arithmétique de nombres entiers à une autre unité de traitement graphique, unité à virgule flottante ou unité arithmétique de nombres entiers ou auxdits éléments de traitement.

8. Procédé ou système selon la revendication 6, dans lequel le conflit de ressources avec la mémoire principale, la mémoire cache ou le stockage sur disque comprend l'un quelconque parmi une bande passante pour, un accès à, et un espace dans la mémoire principale, la mémoire cache ou le stockage sur disque et l'accès auxdites une ou plusieurs des ressources matérielles communes d'une manière prédéfinie en réponse à l'exécution de ladite instruction supplémentaire comprend la réduction d'une quantité de pré-récupération à partir de la mémoire principale ou du stockage sur disque, un vidage des pages inutiles de la mémoire principale vers le stockage sur disque, l'indication d'une partie d'une ligne de cache à introduire dans une mémoire cache, la fission d'instructions pour accéder à moins de lignes de cache, ou la réduction d'un nombre de lectures ou d'écritures simultanées.

9. Procédé ou système selon la revendication 6, dans lequel les ressources matérielles communes comprennent le dispositif de commande d'interface réseau et l'accès auxdites une ou plusieurs des ressources matérielles communes d'une manière prédéfinie en réponse à l'exécution de ladite instruction supplémentaire comprend la réduction de l'interrogation du dispositif de commande d'interface réseau.

10. Procédé ou système selon l'une quelconque des revendications précédentes, dans lequel les instructions supplémentaires identifient en outre un conflit de ressources sous la forme d'une exigence d'énergie ou le refroidissement des éléments de traitement accédant auxdites une ou plusieurs des ressources matérielles communes d'une manière prédéfinie en réponse à l'exécution de ladite instruction supplémentaire comprend le changement d'une fréquence d'horloge ou la désactivation d'éléments de traitement.

11. Procédé ou système selon l'une quelconque des revendications précédentes, dans lequel l'instruction supplémentaire indique en outre au moins l'un parmi :
si une action doit être effectuée pour une atténuation de conflit ;
quel type d'action doit être effectué ; et
un groupe d'instructions auquel s'applique le conflit de ressources.
